# EUROPEAN PATENT SPECIFICATION

(11) **EP 2 680 465 B1**
(45) Date of publication and mention of the grant of the patent: **16.10.2019**
(21) Application number: 13174428.6
(22) Date of filing: 28.06.2013
(51) Int. Cl.: H04H 40/90, H04N 7/20, H04N 7/22

(54) **VIDEO AND/OR AUDIO DATA DISTRIBUTION SYSTEM**
VIDEO- UND/ODER AUDIODATENVERTEILUNGSSYSTEM
SYSTÈME DE DISTRIBUTION DE DONNÉES AUDIO ET/OU VIDÉO

(30) Priority: 28.06.2012 GB 201211483
(43) Date of publication of application: 01.01.2014
(73) Proprietor: Global Invacom Ltd., Stevenage, Hertfordshire SG1 2UG (GB)
(72) Inventor: STAFFORD, Gary, Stevenage, Hertfordshire SG1 2UG (GB)
(74) Representative: Stephenson, Philip

(56) References cited:
- WO-A1-2012/007759
- DE-A1- 19 503 041

## Description

The invention to which this application relates is a data distribution system and particularly, although not necessarily exclusively, a distribution system which allows the distribution of data from a plurality of receiving means such as an antenna and a plurality of Low Noise Blocks which process the data received via the antenna at each receiving location.

The use of satellite data transmission systems is well known and typically data to allow the generation of video, audio and auxiliary services can be broadcast from one or more broadcast locations to a plurality of receiving locations via one or more satellites. The data signals are typically transmitted within allocated bandwidths and, at each receiving location the same are received by the antenna and LNB and then passed to be processed by one or more broadcast data receivers at the said receiving location in order to allow the video, audio and/or auxiliary data to be generated and provided as a television and/or radio and/or auxiliary service to the user in response to a user selection made via the broadcast data receiver.

The applicant, in their co-pending applications, have disclosed the possibility of distributing data for at least a portion of the supply between the receiving location and one or more broadcast data receivers in an optical format in order to improve the conventional coaxial cable networks and relatively complex switching apparatus which is to be used. DE19503041 discloses another such system for data distribution.

The aim of the present invention is to further improve the provision of data distribution systems of this type and to further
allow the efficient distribution of data which may be received from a number of data supplies such as from a plurality of satellites.

In accordance with a first aspect of the invention there is provided a data distribution system for data which is received from a plurality of data sources, said apparatus including at least one Low Noise Block (LNB) to receive data from each of the data sources from which data is to be received, data distribution means from the at least one LNB to at least one broadcast data receiver and at least a portion of the distribution means allows the transmission of data therealong in an optical format and wherein in response to a user selection of a service made via the broadcast data receiver, the required data for the selected service is identified, along with the data source and/or band from which said required data can be obtained and switching means are operated to allow the required data to be supplied to the said broadcast data receiver via one of a number of data feeds leading from the switching means to the broadcast data receiver characterised in that each of the data feeds allows the up conversion of at least part of the data signal carried therealong followed by the down conversion of the same via first and second band pass filters with an amplifier located intermediate the same.
In one embodiment there are provided "n" satellite sources connected to the distribution system and a feed from one of the satellite sources is selected in response to a user selection made via the broadcast data receiver. Typically, in addition to selecting the appropriate satellite source from which the data is to be received, the appropriate band on which the data for the selected service is transmitted is also identified and at least one of the data feeds to the broadcast data receiver is tuned to allow the appropriate band on which the required data is carried to be forwarded to the broadcast data receiver for processing thereby to provide the selected service.

In one embodiment when a new user service selection is made the required data for the new selection may be carried by a different satellite source, in which case a signal is sent from the broadcast data receiver to switching means to allow the required data to be supplied to the broadcast data receiver, possibly along a data feed in place of the previous data feed but more typically, along another data feed to the broadcast data receiver and that data feed can be tuned to the appropriate band on which the data for the new service is carried to allow that data to be received by the broadcast data receiver. This therefore allows, for example, the situation where a user chooses to watch one programme and record another at the same time to be achieved, with data for the programme being viewed carried along one data feed and data for the programme being recorded being carried along another data feed.

In one embodiment the said signal representative of the user selection is transmitted via a DiSeq command from the broadcast data receiver and this determines the required satellite data feed which is to be used.

Typically the data from each of the LNB's is carried in an optical format at least partially between the LNB and the broadcast data receivers and this includes an optical switching means.

In one embodiment the switching means allows the receipt of data from "n" satellite sources and the selected supply of data to n broadcast data receivers.

In one embodiment the switching means are 4x4 switching means which allows the connection of data feeds from four satellite sources to a broadcast data receiver and to allow the broadcast data receiver to receive data selectively from four feeds at different wavelengths, with the particular feed selected in response to the user selection at that time.

Typically at any given time for each broadcast data receiver, data from only one of the satellite sources will be provided dependent on the user selection which has been made. In another embodiment a band from one satellite LNB and a band from the same or another LNB can be routed to the broadcast data system.

In one embodiment, in addition to the data provided from each of the satellite feeds, data supplied by a terrestrial broadcast system can be provided. In one embodiment the said terrestrial data feed will bypass the switching means and therefore be connected to be available to each of the supply means to the broadcast data receivers.

In one embodiment each of the data feeds includes the same data processing components and in the same order.

The up conversion of at least part of the data signal followed by the down conversion of the data signal is in contrast to the conventional systems which require at least part of the data signal to be down converted to the base band value and then up converted to a selected frequency and which requires relatively complex and expensive specialised components.

Typically in each feed path in accordance with the invention there are provided a low and high pass filters provided as a diplexer.

In one embodiment the output from one of the low or high pass filters pass as a feed to the broadcast data receiver and the output from the other of the low or high pass filters pass to processing means to allow the frequency up conversion and then down conversion before reaching the broadcast data receiver.

In one embodiment the processing means include a low pass filter, an oscillator, a band pass filter, an amplifier, a further band pass filter, an oscillator, a low pass filter and an amplifier and preferably in that order. In one embodiment a further amplifier may be provided intermediate the diplexer and the first low pass filter.

Although this arrangement does require additional components in the form of the band pass filters to be provided before and after the amplifier and it is counter intuitive to do so given the normal aim to reduce components. However it is found that in this case the provision of the additional filters and the processing components in the manner described avoids the need to use relatively complex components whilst still achieving the required data signal quality by performing the steps of up and then down converting the frequency of at least part of the data signal as required and thereby not being required to down convert the data signals to the base band.

In one embodiment there is provided a data feed from a data signal source to a broadcast data receiver, said feed including an input from the data signal source, a diplexer with a high and low pass filters, means for passing at least part of the data signal to processing means wherein said processing means include, in series, a band pass filter, an amplifier, and a further band pass filter, and in which the said data signal is first up converted and then down converted.In one embodiment the processing means include a low pass filter, and an oscillator prior to the first band pass filter and an oscillator, a low pass filter and an amplifier after the second band pass filter.

Typically the method of processing at least part of a data signal received and carrying data signals for the generation of video, audio and /or auxiliary data therefrom, comprises the steps of receiving the data signals from a data source, and processing at least part of the data signal such that the frequency of the same is first up converted and then down converted prior to reaching the broadcast data receiver.

The provision of the distribution system as herein described avoids the need for complex switching systems to be provided using conventional coaxial cable distribution systems.

Specific embodiments of the invention are now described with reference to the accompanying figures; wherein
Figure 1 illustrates in a schematic manner one embodiment of a data transmission system in accordance with the invention; and
Figure 2 illustrates one embodiment of components of a data distribution system in accordance with the invention.

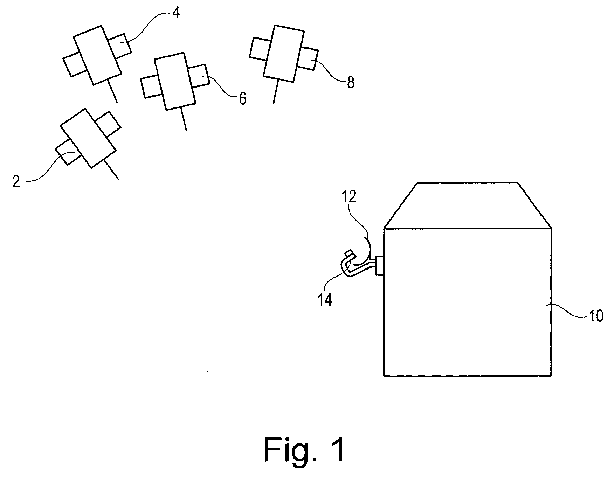

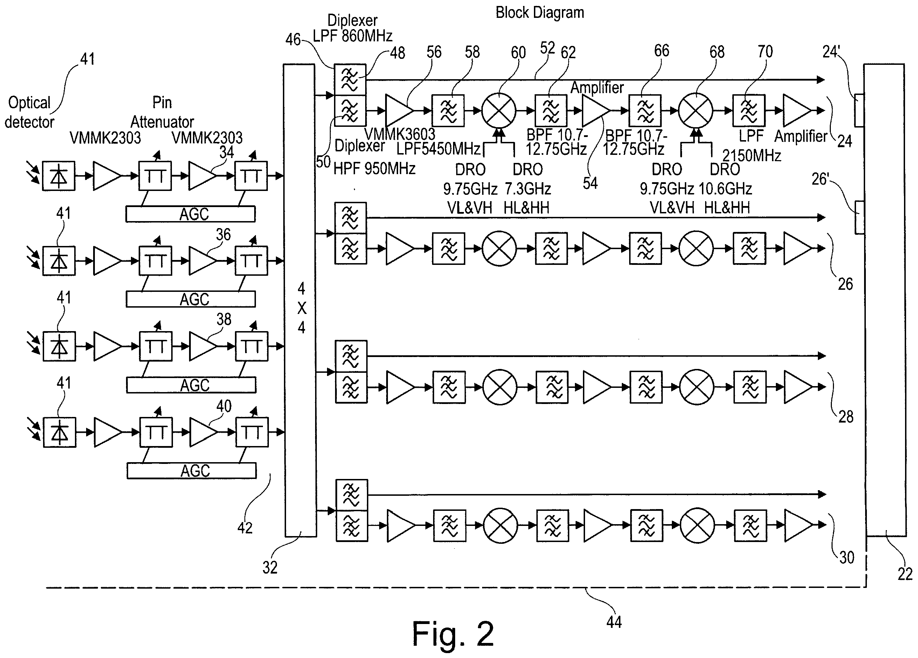

Referring firstly to Figure 1 there is illustrated a data transmission system in accordance with one embodiment of the invention. The transmission system in this example comprises four satellite sources 2,4,6,8, each of which relay transmitted data to a plurality of receiving locations, one of which, 10, is illustrated. At the receiving location 10 there is provided one or more antennas 12 and LNB's 14 provided for the receipt and initial processing of data signals from each of the satellites. Selected data signals from the said sources can then be converted into an optical format and transmitted towards switching means and onward selective transmission to the broadcast data receiver as will now be described with reference to Figure 2.

In Figure 2 there is illustrated the manner in which the data received from the LNB's can be selectively supplied to the broadcast data receiver 22 in response to a user selection made at the broadcast data receiver. The apparatus depicted herein
may therefore be provided at the user location and in connection with, for example, a fibre optic distribution system leading from the LNB's and which distribution system can allow the distribution of data to more than one user location.

The broadcast data receiver 22 is provided at a particular location, typically a house 10 or apartment, and interactive means, typically a remote control device, are provided to allow user interaction with the broadcast data receiver such as to allow the user to select to view or record a particular television programme carried on a particular channel for which video and audio data is required to be generated.

The broadcast data receiver 22 is connected to four data feeds, 24,26,28,30 in this embodiment. The data feeds are provided so as to be independently able to transmit and process data therealong at for, example, four different frequency bandwidths. This means that, for example, one of the feeds 24 can carry data for one or more television channels, a second feed 26 can carry data for a second channel or second group of television channels and so on for feeds 28, 30. The data feeds are connected upstream to switching means 32 and upstream therefrom the switching means are connected to data inputs 34,36,38,40. Each of the inputs can carry data received from any of the satellite sources and LNB's 14,16,18,20 in dependence upon the user selection which has been made. The inputs 34,36,38,40 each include an optical detector 41 to allow the data to be received in an optical format and then processed subsequently in the required RF format. In an alternative arrangement the optical converters may be located at the switching means 32.

In the operation of the invention, when the user selects to view a particular television channel at the broadcast data receiver 22 via the remote control, the receiver, in response to the user selection will determine, typically with reference to a look up table stored in memory at the receiver, the data which is required to allow the channel to be generated in response to the user request. This will include the identification of the particular satellite source and the particular band on which the data is carried and one of the feeds, for example, the feed 24 can be tuned to process the required band for the required data signals from the particular LNB.

Once this is identified a signal is transmitted, typically in DiSeq format, from the broadcast data receiver to the switching means 32. The switching means 32 allows connection at the front end 42 to one of the satellite inputs 34,36,38,40 as appropriate and hence only data from the selected satellite feed will pass through the switching means for the selected service. The broadcast data receiver will then determine the tuning of the feed 24 to the appropriate band from the selected satellite feed on which the data for the selected service is carried and so the required data passes to the broadcast data receiver via the port 24' on the receiver which is connected to the feed 24.

If a user makes another selection at the same time as the service on feed 24 is being used then the above process is repeated and, if necessary to obtain the required data, a different satellite inputs 34,36,38,40 is referred to by the switching means 32 and data for the new selected service is obtained from the appropriate satellite source and then passed by the switching means to the data feed 26. This data feed is tuned to the appropriate band to allow the required data for the newly selected service to be passed to the receiver 22 via the port 26' so that the new service is made available to the user via the broadcast data receiver 22 via feed 26. This allows, for example, data for the new service such as a television programme, to be stored in the memory of the broadcast data receiver while the programme of the previously selected service is being watched or possibly also recorded.

In one embodiment, in addition, to the provision of digital data which has been transmitted being made available via the system, terrestrially broadcast data can be made available to the broadcast data receiver via a separate feed 44, shown in broken lines in Figure 2 and it will be seen that this bypasses the switching means and is fed directly to the broadcast data receiver. In another embodiment the terrestrial data could be diplexed on each of the inputs 34,36,38,40 and passed all the way through the system but can as shown, be diplexed off before switch 32 and then passed via a port connection to broadcast data receiver 22.

In summary therefore the broadcast data receiver can determine which satellite feed is required to be connected to each port and allows multiple services to be provided at the same time over the distribution network to one or more broadcast data receivers connected thereto.

In each of the data feeds 24,26,28,30, the received data signals pass through a diplexer 46 with a Low pass filter 48 typically at a values of 860 MHz and a high pass filter 50 at a value of , 950MHz. Part of the data signal 52 passes to the port connection at the receiver while the other part 54 passes through processing means formed by a plurality of components as will now be described. Although the components will be described and are provided in this embodiment in a preferred form it should be appreciated that it is also important to appreciate that some variation to the components may be made but the aim is to achieve the processing of the data signals in as efficient and as cost effective as manner as possible and this is achieved by first up converting the signal and then downconverting the same which is contrary to conventional processing in which the data signal would be down converted to a base band level and then up converted.

The processing means comprise an amplifier 56 leading to a Low Pass filter 58 at a value of 5450MHz and in turn an oscillator 60, typically a dielectric resonator oscillator (DRO) operating at a frequency of 9.75GHz for Vertical High (VH) and Vertical Low (VL) signals and 7.3GHz for Horizontal Low (HL) and Horizontal High (HH) signals. The data signals then pass to a band pass filter 62 with a range of 10.7 to 12.75GHz and then an amplifier 64 before passing to a second band pass filter 66 with the same frequency range as the first. These band pass filters are additional components to the conventional system which cause the down conversion of the data signal to the base band but allow the control and processing of the data signal to be achieved without the relatively complex apparatus required for the conventional system.

The data signals are then transferred from the band pass filter 66 to an oscillator 68 operating at 9.75GHz and 10.6GHz respectively and then to a low pass filter 70 at 2150MHz and in turn to an amplifier prior to the port 24' of the broadcast data receiver.

The above components and steps are repeated for each of the data feeds 24,26,28,30.

Thus the use of the optical format from each of the satellite feeds and the subsequent switching means as described ensures that all of the data received from a plurality of satellites can be made available to a broadcast data receiver via a plurality of data feeds which are arranged with processing components which allow each to be used to process and transmit the required data signal at that time whilst minimising the cable connections and complexity of the distribution system in comparison to what would conventionally be required to be used.

It should also be noted that the distribution system as herein described is relatively easily scalable thereby improving the flexibility and utility of the same.

## Claims

1. A data distribution system for data which is received from a plurality of data sources (2,4,6,8;44), said apparatus including at least one Low Noise Block (LNB) (14, 16,18,20)) to receive data from each of the data sources from which data is to be received, data distribution means from the at least one LNB to at least one broadcast data receiver (22) and at least a portion of the distribution means allows the transmission of data therealong in an optical format and wherein in response to a user selection of a service made via the broadcast data receiver (22), the required data for the selected service is identified, along with the data source and/or band from which said required data can be obtained and switching means (32) are operated to allow the required data to be supplied to the said broadcast data receiver via one of a number of data feeds (24,26,28,30) leading from the switching means (32)to the broadcast data receiver (22) **characterised in that** each of the data feeds (24,26,28,30) allows the up conversion of at least part of the data signal carried therealong followed by the down conversion of the same via first and second band pass filters (62,66)with an amplifier (64) located intermediate the same.

2. A system according to claim 1 wherein the data sources are a number of satellites transmitting data to the data distribution means and the data from one of the said satellites is selected in response to a user selection made via the broadcast data receiver.

3. A system according to claim 2 wherein in addition to selecting the appropriate satellite from which the data is to be received the appropriate band on which the data is transmitted is also identified and one of the data feeds to the broadcast data receiver is tuned to allow the data signals carried on the appropriate band on which the required data is to be received to be forwarded to the broadcast data receiver.

4. A system according to claim 1 wherein when a new user service selection is made a signal is sent from the broadcast data receiver to switching means to allow the required data to be obtained from the distribution means and supplied to the broadcast data receiver via one of the data feeds.

5. A system according to claim 4 wherein the data signal is carried along another data feed to the broadcast data receiver and that data feed can be tuned to the appropriate band on which the data signal for the new service is carried to allow that data to be received by the broadcast data receiver instead of or in addition to the data signal carried on the first data feed.

6. A system according to claim 5 wherein the said signal is transmitted as a DiSeq command to the switching means from the broadcast data receiver and this determines the required data source which is to be connected to a data feed and in turn the broadcast data receiver.

7. A system according to claim 1 wherein the data is carried along the distribution means to which the switching means is connected in an optical format at least partially between the LNB and the switching means.

8. A system according to claim 1 wherein the switching means are 4x4 switching means which allow the connection of data feeds from four data sources to one or more broadcast data receivers.

9. A system according to claim 1 wherein a band carrying data signals from one LNB and a band carrying data signals from the same or another LNB can be routed to the broadcast data system via respective data feeds.

10. A system according to claim 1 wherein in addition to the data provided from each of the satellite feeds, data supplied by a terrestrial broadcast system is provided.

11. A system according to claim 10 wherein the said terrestrial data feed bypasses the switching means and is connected to be available directly to the broadcast data receiver.

12. A system according to claim 1 wherein each of the data feeds includes the same data processing components and in the same order.

13. A system according to claim 1 wherein in each data feed there are provided low and high pass filters provided as a diplexer.

14. A system according to claim 1 wherein the output from one of the low or high pass filters pass to the broadcast data receiver and the output from the other of the low or high pass filters pass to processing means to allow the frequency up conversion and then down conversion before reaching the broadcast data receiver.

## Patentansprüche

1. Datenverteilungssystem für aus einer Vielzahl von Datenquellen (2, 4, 6, 8; 44) empfangenen Daten, wobei die genannte Vorrichtung Folgendes enthält: wenigstens einen rauscharmen Signalumsetzer (Low Noise Block, LNB) (14, 16, 18, 20) zum Empfangen von Daten aus jeder der Datenquellen, aus der Daten zu empfangen sind, ein Datenverteilungsmittel von dem wenigstens einen LNB zu wenigstens einem Rundfunkdatenempfänger (22) und wobei wenigstens ein Teil des Verteilungsmittels die Übertragung von Daten daran entlang in einem optischen Format zulässt und wobei als Reaktion auf eine über den Rundfunkdatenempfänger (22) getätigte Auswahl eines Dienstes durch den Benutzer die erforderlichen Daten für den ausgewählten Dienst zusammen mit der Datenquelle und/oder dem Band, aus der/dem die genannten erforderlichen Daten bezogen werden können, identifiziert werden, und Umschaltmittel (32) betätigt werden, um zuzulassen, dass die erforderlichen Daten dem genannten Rundfunkdatenempfänger über eine von einer Anzahl von Dateneinspeisungen (24, 26, 28, 30), die von den Umschaltmitteln (32) zum Rundfunkdatenempfänger (22) führen, zugeführt werden, **dadurch gekennzeichnet, dass** jede der Dateneinspeisungen (24, 26, 28, 30) die Aufwärtskonvertierung von wenigstens einem Teil des daran entlang transportierten Datensignals zulässt, gefolgt von der Abwärtskonvertierung desselben über ein erstes und ein zweites Bandpassfilter (62, 66) mit einem Verstärker (64), der zwischen denselben liegt.

2. System nach Anspruch 1, wobei die Datenquellen eine Anzahl von Satelliten sind, die Daten an das Datenverteilungsmittel übertragen und die Daten von einem von den genannten Satelliten als Reaktion auf eine über den Rundfunkdatenempfänger getätigte Benutzerauswahl ausgewählt werden.

3. System nach Anspruch 2, wobei zusätzlich zum Auswählen des zutreffenden Satelliten, von dem die Daten zu empfangen sind, auch das zutreffende Band, auf dem die Daten übertragen werden, identifiziert wird und eine von den Dateneinspeisungen zum Rundfunkdatenempfänger abgestimmt wird, um zuzulassen, dass die Datensignale, die auf dem zutreffenden Band transportiert werden, auf dem die erforderlichen Daten zu empfangen sind, an den Rundfunkdatenempfänger weitergeleitet werden.

4. System nach Anspruch 1, wobei, wenn durch den Benutzer eine neue Dienstauswahl getätigt wird, ein Signal von dem Rundfunkdatenempfänger an Umschaltmittel gesendet wird, um zuzulassen, dass die erforderlichen Daten von dem Verteilungsmittel bezogen werden und über eine der Dateneinspeisungen dem Rundfunkdatenempfänger zugeführt werden.

5. System nach Anspruch 4, wobei das Datensignal an einer weiteren Dateneinspeisung entlang zum Rundfunkdatenempfänger transportiert wird und diese Dateneinspeisung auf das zutreffende Band abgestimmt werden kann, auf dem das Datensignal für den neuen Dienst transportiert wird, um zuzulassen, dass Daten anstelle von oder zusätzlich zu dem auf der ersten Dateneinspeisung transportierten Datensignal durch den Rundfunkdatenempfänger empfangen werden.

6. System nach Anspruch 5, wobei das genannte Signal vom Rundfunkdatenempfänger als ein DiSeq-Befehl zu den Umschaltmitteln übertragen wird und dies die erforderliche Datenquelle, die mit einer Dateneinspeisung zu verbinden ist, und dann wiederum den Rundfunkdatenempfänger bestimmt.

7. System nach Anspruch 1, wobei die Daten an dem Verteilungsmittel, mit dem die Umschaltmittel verbunden sind, entlang wenigstens teilweise zwischen dem LNB und den Umschaltmitteln in einem optischen Format transportiert werden.

8. System nach Anspruch 1, bei dem die Umschaltmittel 4x4 Umschaltmittel sind, die die Verbindung von Dateneinspeisungen aus vier Datenquellen mit einem oder mehr Rundfunkdatenempfängern zulassen.

9. System nach Anspruch 1, wobei ein Band, das Datensignale von einem LNB transportiert, und ein Band, das Datensignale von demselben oder einem anderen LNB transportiert, über jeweilige Dateneinspeisungen zum Rundfunkdatensystem geleitet werden können.

10. System nach Anspruch 1, wobei zusätzlich zu den Daten, die von jeder der Einspeisungen von Satelliten bereitgestellt werden, von einem terrestrischen Rundfunksystem zugeführte Daten bereitgestellt werden.

11. System nach Anspruch 10, wobei die genannte terrestrische Dateneinspeisung die Umschaltmittel umgeht und so angeschlossen ist, dass sie dem Rundfunkdatenempfänger direkt zur Verfügung steht.

12. System nach Anspruch 1, wobei jede der Dateneinspeisungen die gleichen Datenverarbeitungskomponenten und in der gleichen Reihenfolge enthält.

13. System nach Anspruch 1, wobei in jeder Dateneinspeisung ein Hoch- und ein Tiefpassfilter bereitgestellt sind, die als ein Diplexer bereitgestellt sind.

14. System nach Anspruch 1, wobei der Ausgang von einem von dem Tief- und dem Hochpassfilter zu dem Rundfunkdatenempfänger durchgelassen wird und der Ausgang von dem anderen von dem Tief- oder dem Hochpassfilter zu einem Verarbeitungsmittel durchgelassen wird, um die Aufwärtskonvertierung und die Abwärtskonvertierung der Frequenz vor Erreichen des Rundfunkdatenempfängers zuzulassen.

## Revendications

1. Système de distribution de données pour des données qui sont reçues à partir d'une pluralité de sources de données (2, 4, 6, 8 ; 44), ledit appareil incluant au moins un bloc à faible bruit (« Low Noise Block » (LNB) (14, 16, 18, 20)) pour recevoir des données à partir de chacune des sources de données à partir desquelles des données sont destinées à être reçues, le moyen de distribution de données à partir de l'au moins un LNB vers au moins un récepteur de données diffusées (22) et au moins une portion du moyen de distribution permet la transmission de données le long de celui-ci dans un format optique et dans lequel, en réaction à une sélection d'utilisateur d'un service effectuée via le récepteur de données diffusées (22), les données requises pour le service sélectionné sont identifiées, en conjonction avec la source de données et/ou la bande à partir de laquelle lesdites données requises peuvent être obtenues et des moyens de commutation (32) sont opérés afin de permettre aux données requises d'être fournies audit récepteur de données diffusées via une alimentation parmi un certain nombre d'alimentations de données (24, 26, 28, 30) allant des moyens de commutation (32) au récepteur de données diffusées (22), **caractérisé en ce que** chacune des alimentations de données (24, 26, 38, 30) permet la conversion montante d'au moins une partie du signal de données transporté le long de celle-ci suivie de la conversion descendante de celle-ci via des premier et deuxième filtres à bande passante (62, 66) avec un amplificateur (64) qui est localisé entre celles-ci.

2. Système selon la revendication 1, dans lequel les sources de données sont un certain nombre de satellites qui transmettent des données vers le moyen de distribution de données et les données en provenance de l'un desdits satellites sont sélectionnées en réaction à une sélection d'utilisateur effectuée via le récepteur de données diffusées.

3. Système selon la revendication 2 dans lequel en plus de la sélection du satellite approprié à partir duquel les données sont destinées à être reçues, la bande appropriée sur laquelle les données sont transmises est également identifiée et l'une des alimentations de données se rendant au récepteur de données diffusées est accordée afin de permettre aux signaux de données, transportés sur la bande appropriée sur laquelle les données requises sont destinées à être reçues, d'être réacheminés vers le récepteur de données diffusées.

4. Système selon la revendication 1 dans lequel lorsqu'une nouvelle sélection de service d'utilisateur est effectuée, un signal est envoyé à partir du récepteur de données diffusées vers les moyens de commutation afin de permettre aux données requises d'être obtenues à partir du moyen de distribution et fournies au récepteur de données diffusées via l'une des alimentations de données.

5. Système selon la revendication 4 dans lequel le signal de données est transporté le long d'une autre alimentation de données vers le récepteur de données diffusées et qu'une alimentation de données peut être accordée à la bande appropriée sur laquelle le signal de données pour le nouveau service est transporté pour permettre à ces données d'être reçues par le récepteur de données diffusées au lieu de, ou en plus du signal de données transporté sur la première alimentation de données.

6. Système selon la revendication 5 dans lequel ledit signal est transmis en tant qu'instruction DiSeq aux moyens de commutation à partir du récepteur de données diffusées et ceci détermine la source de données requises qui est destinée à être connectée à une alimentation de données et à son tour au récepteur de données diffusées.

7. Système selon la revendication 1 dans lequel les données sont transportées le long du moyen de distribution auquel les moyens de commutation sont connectés dans un format optique au moins partiellement entre le LNB et les moyens de commutation.

8. Système selon la revendication 1 dans lequel les moyens de commutation sont des moyens de commutation 4x4 qui permettent la connexion d'alimentations de données à partir de quatre sources de données vers un ou plusieurs récepteurs de données diffusées.

9. Système selon la revendication 1 dans lequel une bande transportant des signaux de données à partir d'un LNB et une bande transportant des signaux de données à partir du même, ou d'un autre, LNB peut être dirigée vers le système de données diffusées via des alimentations de données respectives.

10. Système selon la revendication 1 dans lequel en plus des données fournies à partir de chacune des alimentations satellitaires, des données fournies par un système de diffusion terrestre sont prévues.

11. Système selon la revendication 10 dans lequel ladite alimentation de données terrestre contourne les moyens de commutation et est connectée de façon à être directement disponible pour le récepteur de données diffusées.

12. Système selon la revendication 1 dans lequel chacune des alimentations de données inclut les mêmes composants de traitement de données et dans le même ordre.

13. Système selon la revendication 1 dans lequel dans chaque alimentation de données il est prévu des filtres passe-bas et passe-haut lesquels sont prévus en tant que diplexeur.

14. Système selon la revendication 1 dans lequel la sortie en provenance de l'un des filtres passe-bas et passe-haut passe au récepteur de données diffusées et la sortie en provenance de l'autre des filtres passe-bas et passe-haut passe au moyen de traitement pour permettre la conversion montante en fréquence et ensuite la conversion descendante avant d'atteindre le récepteur de données diffusées.
